# EUROPÄISCHE PATENTSCHRIFT

(11) **EP 3 339 827 B1**
(45) Veröffentlichungstag und Bekanntmachung des Hinweises auf die Patenterteilung: **27.01.2021**
(21) Anmeldenummer: 17208075.6
(22) Anmeldetag: 18.12.2017
(51) Int. Cl.: G01K 13/10, G01K 15/00

(54) **KERNTEMPERATURFÜHLER FÜR EIN GARGERÄT, VERFAHREN ZUR SETZERKENNUNG EINES KERNTEMPERATURFÜHLERS SOWIE VERFAHREN ZUR BESTIMMUNG DER WÄRMELEITFÄHIGKEIT EINES GARGERÄTS**
CORE TEMPERATURE SENSOR FOR A COOKING DEVICE, METHOD FOR DETECTING THE SETTING OF A CORE TEMPERATURE SENSOR AND METHOD FOR DETERMINING THE THERMAL CONDUCTIVITY OF A COOKING DEVICE
CAPTEUR DE TEMPÉRATURE À COEUR POUR UN APPAREIL DE CUISSON, PROCÉDÉ DE DÉTECTION DE LA POSITION D'UN CAPTEUR DE TEMPÉRATURE À COEUR AINSI QUE PROCÉDÉ DE DÉTERMINATION DE LA CONDUCTIVITÉ THERMIQUE D'UN APPAREIL DE CUISSON

(30) Priorität: 23.12.2016 DE 102016125566
(43) Veröffentlichungstag der Anmeldung: 27.06.2018
(73) Patentinhaber: RATIONAL Aktiengesellschaft, 86899 Landsberg am Lech (DE)
(72) Erfinder: Schramm, Hans-Dieter, 86916 Kaufering (DE); Süßmair, Werner, 86947 Beuerbach (DE); Meiswinkel, Stephan, 57482 Wenden (DE); Kettemer, Philip, 86925 Fuchstal-Leeder (DE); Tils, Dr., Thomas, 86899 Landsberg (DE); Walter, Dr., Alexander, 86932 Lengenfeld (DE); Heinrich, Dr., Martin, 87740 Buxheim (DE)
(74) Vertreter: Prinz & Partner mbB

(56) Entgegenhaltungen:
- DE-A1- 10 061 821
- DE-A1- 10 114 617
- DE-A1- 10 323 651
- DE-A1-102010 047 159
- JP-A- 2009 192 438

## Beschreibung

Die Erfindung betrifft einen Kerntemperaturfühler für ein Gargerät und ein Verfahren zur Setzerkennung eines Kerntemperaturfühlers.

Bei Gargeräten, insbesondere bei Gargeräten für den professionellen Einsatz in Restaurants, Kantinen und der Großgastronomie, wird die Temperatur des im Gargerät gegarten Gargutes oft durch einen Kerntemperaturfühler gemessen. Solche Gargeräte garen das Gargut mithilfe von Heißluft, Wasserdampf und/oder Mikrowellenstrahlung.

Kerntemperaturfühler bestehen üblicherweise aus einem Griff und einer Messspitze, wobei in der Messspitze über die Länge verteilt mehrere Temperatursensoren vorgesehen sind. Die Messspitze des Kerntemperaturfühlers wird vor dem Beginn des Garvorgangs in das Gargut eingesetzt, sodass die Kerntemperatur des Garguts während des Garvorgangs überwacht und der Garvorgang in Abhängigkeit der Kerntemperatur gesteuert werden kann.

Zur präzisen Steuerung des Garprozesses ist es notwendig, dass der Kerntemperaturfühler korrekt oder überhaupt in das Gargut gesteckt wurde. Um zu erkennen, ob dies geschehen ist, wird beispielsweise der vom Kerntemperatursensor übermittelte Temperaturverlauf mit dem Temperaturverlauf der Atmosphäre im Garraum verglichen. Ein nicht gesteckter Kerntemperaturfühler kann dann daran erkannt werden, dass sich die vom Kerntemperaturfühler gemessene Temperatur sehr schnell an die Temperatur der Garraumatmosphäre anpasst. Ist jedoch der Kerntemperaturfühler in ein Gargut eingesteckt, dann isoliert das Gargut den Kerntemperaturfühler gegenüber der Atmosphäre im Garraum, und der Temperaturanstieg verläuft wesentlich langsamer.

Nachteilig bei diesem Verfahren ist, dass ein nicht gesteckter Kerntemperaturfühler nur erkannt werden kann, wenn die Heizvorrichtung des Gargerätes in Betrieb genommen wird, und dass die Detektionsdauer sehr lang ist. Auch können mit einem solchen Verfahren und einem üblichen Kerntemperaturfühler neben der Temperatur keine weiteren Eigenschaften des Gargutes bestimmt werden.

Die DE 103 23 651 A1 beschreibt ein Verfahren zur Bestimmung zumindest eines Stoffwertes in einem Körper, indem ein zeitlich veränderliches Temperaturfeld innerhalb des Körpers erzeugt wird und eine Vielzahl erster Messwerte in dem Körper erfasst wird, wobei die ersten Messwerte zumindest einen ersten Temperaturwert an einer ersten Position und zumindest einen zweiten Temperaturwert an einer von der ersten Position getrennten zweiten Position umfassen. Aus den ersten Messwerten kann ein Stoffwert des Körpers bestimmt werden.

Die DE 100 61 821 A1, die DE 101 14 617 A1 und die JP 2009 192438 A offenbaren Kerntemperaturfühler und Gargeräte mit Kerntemperaturfühlern, in denen Temperatursensoren vorgesehen sind.

Die DE 10 2010 047 159 A1 offenbart eine Vorrichtung zur Messung einer Konzentration eines Gases in einer Gasprobe. Zu diesem Zweck umfasst die Vorrichtung einen Sensor mit einem Heizelement und mit Temperatursensoren zur Erfassung der Temperatur des Heizelements, sowie mit einem Temperatursensor zur Erfassung der Temperatur des von dem Heizelement nicht erwärmten Messgases. Anhand der Temperaturdifferenz zwischen der Temperatur des elektrischen Heizelements und der Temperatur des Messgases ist die Wärmeleitfähigkeit des Messgases ermittelbar.

Es ist Aufgabe der Erfindung, einen Kerntemperaturfühler sowie ein Verfahren zu seiner Anwendung bereitzustellen, durch die ohne Inbetriebnahme der Heizvorrichtung des Gargerätes erkannt werden kann, ob der Kerntemperaturfühler gesetzt ist, und ggf. weitere Eigenschaften des Garguts bestimmt werden können.

Die Aufgabe wird gelöst durch einen Kerntemperaturfühler für ein Gargerät, mit einer Messspitze, wenigstens einer Messstrecke, die an der Messspitze angeordnet ist, und wenigstens einem Heizelement, das als Heizdraht ausgeführt ist und das sich in der Messspitze entlang der Messstrecke erstreckt, wobei die Messstrecke mehrere Temperatursensoren aufweist, die zueinander beabstandet angeordnet sind. Das Heizelement verläuft parallel zur Messstrecke. Zudem weist das Heizelement wenigstens einen Referenztemperatursensor zur Messung der Temperatur des Heizelementes auf, der in axialer Richtung gesehen neben einem der Temperatursensoren der Messstrecke angeordnet ist. Dabei kann der Abstand zwischen den Temperatursensoren und dem Referenztemperatursensor bekannt und insbesondere in einer Steuereinheit des Gargerätes hinterlegt sein. Der Abstand der Temperatursensoren voneinander ist in der Nähe der Spitze des Kerntemperaturfühlers kleiner als entfernt von der Spitze.

Der Begriff "Messstrecke" bezeichnet einen Bereich, entlang dem das Heizelement und die Temperatursensoren angeordnet sind. Sie kann sich in axialer Richtung, spiralförmig oder auch in wechselnden Richtungen an der Messspitze erstrecken. Das Heizelement kann sich durchgehend entlang der Messstrecke erstrecken oder auch durch mehrere punktuelle Heizelementabschnitte gebildet sein, die zusammen das Heizelement definieren.

Durch das Heizelement in der Messspitze ist es möglich, auch ohne die Inbetriebnahme der Heizvorrichtung des Gargerätes eine Setzerkennung durchzuführen, also zu erkennen, ob der Kerntemperaturfühler in ein Gargut eingesteckt wurde. Hierzu wird das Heizelement in der Messspitze des Kerntemperaturfühlers zunächst in Betrieb genommen. Wenn der Kerntemperaturfühler korrekt in einem Gargut eingesteckt ist, wird die vom Heizelement erzeugte Wärme größtenteils an das Gargut abgegeben, da das Gargut eine sehr große Wärmekapazität hat. Dadurch wird die Messspitze nur wenig erwärmt, und es kommt zu keinem oder nur zu einem geringen Anstieg der von den Temperatursensoren erfassten Temperaturen. Wenn jedoch der Kerntemperaturfühler nicht gesteckt ist, heizt das Heizelement nahezu ausschließlich die Messspitze des Kerntemperaturfühlers auf, da die die Messspitze umgebende Luft ein guter thermischer Isolator ist. In diesem Fall steigen die von den Temperatursensoren gemessenen Werte rasch an, wodurch erkannt werden kann, dass der Kerntemperaturfühler nicht gesetzt ist. Im Anschluss daran kann dann die Wärmeleitfähigkeit des Lebensmittels dadurch gemessen werden, dass die Temperaturabnahme an den Temperatursensoren ausgewertet wird. Durch das in den Kerntemperaturfühler integrierte Heizelement ist somit eine von den Heizeinrichtungen des Gargerätes unabhängige Setzerkennung und Messung der Wärmeleitfähigkeit möglich. Zudem ist es durch die axial beabstandeten Temperatursensoren möglich, die Kerntemperatur des Gargutes an verschiedenen Stellen im Garraum zu messen und damit die Genauigkeit der getätigten Messungen zu erhöhen. Durch die parallele Anordnung des Heizelements zur Messstrecke, wirkt die vom Heizelement erzeugte Wärme über einen breiten Bereich auf die Messstrecke ein.

Durch das Vorsehen eines Referenztemperaturfühlers kann die Messgenauigkeit des Kerntemperaturfühlers erhöht werden.

Indem der Abstand der Temperatursensoren voneinander in der Nähe des Spitze des Kerntemperaturfühlers kleiner ist als entfernt von der Spitze, ist die Messgenauigkeit erhöht.

In einer Ausgestaltung der Erfindung erstreckt sich das Heizelement zumindest entlang der gesamten Länge der Messstrecke. Dabei entspricht die Länge der Messstrecke dem Abstand der beiden äußeren Temperatursensoren, d. h. den am weitesten voneinander entfernten Temperatursensoren. Auf diese Weise wirkt die von dem Heizelement erzeugte Hitze gleichmäßig auf die Messstrecke ein, wodurch jeder Temperatursensor in gleichem Maße vom Heizelement erwärmt wird.

Vorzugsweise weist das Heizelement so viele Referenztemperatursensoren auf, wie Temperatursensoren an der Messstrecke vorgesehen sind, wodurch die Messgenauigkeit weiter erhöht werden kann. Dabei sind die Referenztemperatursensoren jeweils auf gleicher Höhe in axialer Richtung wie der zugeordnete Temperatursensor angeordnet. Auch hier sind die Abstände zwischen den Temperatursensoren und dem jeweils zugeordneten Referenztemperatursensor bekannt und in einer Steuereinheit des Gargerätes hinterlegt.

In einer Ausführungsvariante ist die Leistung des Heizelementes sehr gering, insbesondere kleiner als 20 W, sodass nahezu die gesamte vom Heizelement erzeugte Wärme durch das Gargut rasch aufgenommen werden kann.

Die Aufgabe wird ferner gelöst durch ein Verfahren zur Setzerkennung eines Kerntemperaturfühlers mit wenigstens einem Temperatursensor und einem Heizelement, insbesondere einem Kerntemperaturfühler wie zuvor beschrieben, mit den folgenden Schritten: Einschalten des Heizelementes, Protokollieren der von dem wenigstens einen Temperatursensor gemessenen Temperatur für zumindest ein vorbestimmtes Messintervall, Ermitteln der Steigung bzw. des Gradienten der Temperatur während des Messintervalls und/oder Ermitteln eines Temperaturunterschiedes zwischen zwei während des Messintervalls aufgenommenen Messwerten, Vergleichen der Steigung bzw. des Gradienten und/oder des Temperaturunterschiedes mit einem entsprechenden Schwellwert und Erkennen, dass der Kerntemperaturfühler in einem Gargut gesetzt ist, wenn die Steigung bzw. der Gradient und/oder der Temperaturunterschied den entsprechenden Schwellwert nicht überschritten hat. Indem der Kerntemperaturfühler mit einem Heizelement versehen ist und die Steigung bzw. der Gradient der Temperatur oder ein Temperaturunterschied in Verbindung mit der Wärmeabgabe des Heizelementes gemessen wird, kann, wie zuvor beschrieben, anhand des Verlaufs der gemessenen Temperaturen erkannt werden, ob der Kerntemperaturfühler korrekt gesetzt wurde oder nicht. Das Verfahren kann von der Steuereinheit des Gargerätes durchgeführt werden.

In einer Ausgestaltung der Erfindung wird das Heizelement ausgeschaltet, sobald das Messintervall verstrichen oder eine materialbedingte Maximaltemperatur erreicht ist, wodurch ein ungewolltes Garen des Garguts durch den Kerntemperaturfühler verhindert wird. Denkbar ist selbstverständlich auch, dass das Heizelement schon vor dem Ende des Messintervalls oder sogar vor Beginn des Messintervalls wieder ausgeschaltet wird.

In einer Ausführungsform der Erfindung weist der Kerntemperaturfühler mehrere Temperatursensoren auf, wobei die Messwerte jedes Temperatursensors einzeln mit einem Schwellwert verglichen werden und/oder ein Mittelwert aus den Messwerten mehrerer, insbesondere aller Temperatursensoren zum Vergleich mit einem Schwellwert gebildet wird. Auf diese Weise kann eine besonders sensible und/oder sehr robuste Methode zur Setzerkennung realisiert werden.

Ferner möglich ist ein Verfahren zur Bestimmung der Wärmeleitfähigkeit eines Garguts mittels eines Kerntemperaturfühlers mit wenigstens einem Temperatursensor und einem Heizelement wie zuvor beschrieben, mit den folgenden Schritten: Einschalten des Heizelementes, Protokollieren der von dem wenigstens einen Temperatursensor gemessenen Temperatur für zumindest ein vorbestimmtes Messintervall, Ermitteln der Steigung bzw. des Gradienten der Temperatur während des Messintervalls und/oder Ermitteln eines Temperaturunterschiedes zwischen zwei während des Messintervalls aufgenommenen Messwerten, und Bestimmen der Wärmeleitfähigkeit des den Kerntemperaturfühler umgebenden Mediums anhand der Steigung und/oder des Temperaturunterschiedes. Das den Kerntemperaturfühler umgebende Medium ist in der Regel das Gargut. Dieses Verfahren kann beispielsweise direkt im Anschluss an das Verfahren zur Setzerkennung angeschlossen oder gleichzeitig durchgeführt werden. Indem durch das Heizelement das Gargut lokal und nur gering beheizt wird, kann aus dem Temperaturverlauf, der von den Temperatursensoren gemessen wurde, insbesondere vom Temperaturabfall bei ausgeschaltetem Heizelement, auf die Wärmeleitfähigkeit des umgebenden Mediums geschlossen werden. Somit kann eine weitere Eigenschaft des Gargutes mithilfe des Kerntemperaturfühlers bestimmt werden. Das Verfahren kann durch die Steuereinheit des Gargerätes ausgeführt werden.

Denkbar ist auch, dass mithilfe des ermittelten Wertes der Wärmeleitfähigkeit noch weitere Eigenschaften des Gargutes, beispielsweise der Wassergehalt des Gargutes, bestimmt werden.

Beispielsweise wird das Heizelement vor oder während des Messintervalls ausgeschaltet, sodass die Temperaturabnahme an den Temperatursensoren und somit die Wärmeabgabe an das den Kerntemperaturfühler umgebende Medium gemessen werden kann, wodurch eine genauere Bestimmung der Wärmeleitfähigkeit des den Kerntemperaturfühler umgebenden Mediums möglich ist.

In einer Ausgestaltung der Erfindung weist der Kerntemperaturfühler mehrere Temperatursensoren auf, wobei zur Bestimmung der Wärmeleitfähigkeit der Mittelwert der Messwerte der einzelnen Temperatursensoren und/oder der Mittelwert der Werte der für jeden Temperatursensor einzeln bestimmten Wärmeleitfähigkeit herangezogen wird. Auf diese Weise lässt sich die Genauigkeit der Bestimmung der Wärmeleitfähigkeit weiter erhöhen.

Vorzugsweise ist die Wärmeleistung des Heizelementes derart gering gewählt, dass, wenn die Messspitze des Kerntemperaturfühlers in einem Gargut eingesteckt ist, die vom Heizelement erzeugte Wärme nahezu vollständig und unmittelbar vom Gargut aufgenommen werden kann. Gleichzeitig ist die Leistung vom Heizelement jedoch so groß gewählt, dass die vom Heizelement erzeugte Wärme wenigstens einen der Temperatursensoren messbar erwärmen kann, wenn der Kerntemperaturfühler nicht in einem Gargut eingesteckt ist, d. h. wenn keine nennenswerten Wärmeverluste auftreten. Auf diese Weise ist eine sehr zuverlässige Setzerkennung des Kerntemperaturfühlers möglich.

Beispielsweise wird auch die Temperatur am Heizelement protokolliert und zur Bestimmung der Wärmeleitfähigkeit und/oder des Schwellwertes herangezogen, wodurch die Genauigkeit verbessert werden kann.

Die Energie kann zum Heizelement kabellos übertragen werden, z.B. induktiv, um den Aufbau zu vereinfachen.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 schematisch einen in ein Gargut eingesetzten erfindungsgemäßen Kerntemperaturfühler, und
- Figur 2 einen Temperaturverlauf an einem Temperatursensor eines erfindungsgemäßen Kerntemperaturfühlers.

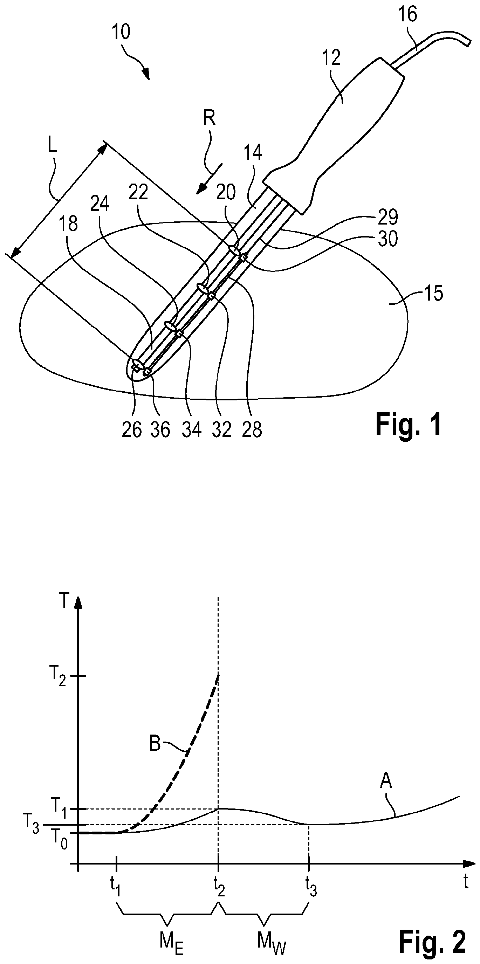

In Figur 1 ist ein Kerntemperaturfühler 10 eines Gargerätes (nicht gezeigt) dargestellt. Bei diesem Gargerät kann es sich um ein Profigerät für den Einsatz in Restaurants, Kantinen und der Großgastronomie handeln. Insbesondere ist es ein Kombi-Dämpfer, also ein Gargerät, bei dem das zu garende Gargut mit Heißluft, Dampf und/oder Mikrowellenstrahlung gegart wird. Die Vorrichtungen zur Erzeugen von Heißluft, Dampf oder Mikrowellenstrahlung werden im Rahmen dieser Erfindung undifferenziert als "Heizvorrichtung" bezeichnet.

Das Gargerät weist zudem eine Steuereinheit (nicht gezeigt) auf, die die Heizvorrichtungen und den Kerntemperaturfühler 10 steuert.

Der Kerntemperaturfühler 10 weist einen Griff 12 auf, von dem sich eine Messspitze 14 erstreckt, die, wie in Figur 1 gezeigt, in ein Gargut 15 eingesteckt werden kann.

Ebenfalls kann am Griff 12 ein Kabel 16 angebracht sein, das den Kerntemperaturfühler 10 mit der Steuereinheit verbindet.

Denkbar ist selbstverständlich auch, dass der Kerntemperaturfühler 10 über ein drahtloses Verfahren mit der Steuerung des Gargerätes informationstechnisch verbunden ist.

Die Messspitze 14 ist stangen- oder dornförmig ausgeführt und weist eine Messstrecke 18 auf, die sich in Axialrichtung R der Messspitze 14 erstreckt. In der Messstrecke 18 sind mehrere Temperatursensoren 20, 22, 24, 26, in der gezeigten Ausführungsform sind es vier Temperatursensoren 20, 22, 24, 26, axial mit gleichen Abständen zueinander angeordnet.

Die Länge L der Messstrecke 18 ist die Strecke zwischen den beiden äußeren Temperatursensoren 20 und 26.

In der Messspitze 14 ist außerdem ein Heizelement 28 vorgesehen, das beispielsweise ein Heizdraht sein kann, wobei die Leistung des Heizelementes 28 sehr gering ist und bei weniger als etwa 20 W liegt.

Das Heizelement 28 erstreckt sich in der gezeigten Ausführungsform parallel entlang der gesamten Länge L der Messstrecke 18 und ist mittels einer Leitung 29 mit dem Griff 12 und dem Kabel 16 elektrisch verbunden.

Denkbar ist auch, dass nicht nur ein Heizelement 28, sondern mehrere Heizelemente vorgesehen sind, die sich parallel zur Messstrecke 18 erstrecken.

Auch ist denkbar, dass sich das Heizelement 28 nicht entlang der gesamten Länge L der Messstrecke 18 erstreckt, sondern nur in bestimmten Bereichen heizende Elemente aufweist, beispielsweise in den Bereichen der Messstrecke 18, in denen die Temperatursensoren 20, 22, 24, 26 vorgesehen sind.

In der gezeigten Ausführungsform sind am Heizelement 28 vier Referenztemperatursensoren 30, 32, 34, 36 vorgesehen, die in axialer Richtung R der Messspitze 14 gesehen neben jeweils einem der Temperatursensoren 20, 22, 24, 26 angeordnet sind. Die Referenztemperatursensoren 30, 32, 34, 36 können die Temperatur des Heizelementes 28 messen.

Das Heizelement 28 weist also genauso viele Referenztemperatursensoren 30, 32, 34, 36 auf, wie Temperatursensoren 20, 22, 24, 26 an der Messstrecke 18 vorgesehen sind.

Der Abstand zwischen den Temperatursensoren 20, 22, 24 und 26 und den zugeordneten, d. h. benachbarten Referenztemperatursensoren 30, 32, 34 bzw. 36 ist bekannt und in der Steuereinheit des Gargerätes hinterlegt.

Anhand von Figur 2, in der zwei Temperaturverläufe an einem der Temperatursensoren 20, 22, 24, 26 dargestellt sind, wird das Verfahren zur Setzerkennung des Kerntemperaturfühlers 10 und zur Messung der Wärmeleitfähigkeit des Gargutes 15 erläutert.

Der als durchgezogene Linie gezeichnete Temperaturverlauf A entspricht einem Temperaturverlauf, wenn der Kerntemperaturfühler 10 in ein Gargut 15 eingesteckt wurde. Der mit der gestrichelten Linie dargestellte Temperaturverlauf B entspricht der Situation, wenn der Kerntemperaturfühler 10 nicht in einem Gargut 15 eingesteckt, sondern von Luft umgeben ist. Zunächst wird die Situation bei eingestecktem Kerntemperaturfühler 10 beschrieben.

Zu Beginn der Messung haben das Gargut 15 und die Messspitze 14 die gleiche Temperatur To, die beispielsweise die Raumtemperatur ist.

Zum Zeitpunkt t₁ wird das Heizelement 28 eingeschaltet. Die Wärmeleistung, die das Heizelement 28 abgibt, ist dabei derart gering gewählt, dass die vom Heizelement 28 erzeugte Wärme nahezu vollständig und unmittelbar vom Gargut 15 aufgenommen wird.

Die Leistung des Heizelementes 28 ist jedoch so groß gewählt, dass ein signifikanter Temperaturanstieg am Temperatursensor 20, 22, 24, 26 auftritt, wenn die kühlende Wirkung eines Gargutes fehlt.

Dementsprechend wird im gesteckten Fall wenig Wärme vom Heizelement 28 auf die Messstrecke 18 und die Temperatursensoren 20, 22, 24, 26 übertragen, sodass nur ein leichter Temperaturanstieg gemessen wird.

Mit dem Einschalten des Heizelementes 28 beginnt auch das Messintervall M_{E} für die Setzerkennung des Kerntemperaturfühlers 10. Wenigstens während dieses Messintervalls M_{E} werden von der Steuereinheit die von den Temperatursensoren 20, 22, 24, 26 und den Referenztemperatursensoren 30, 32, 34, 36 übermittelten Werte protokolliert.

Zum Zeitpunkt t₂ ist das Messintervall M_{E} zur Setzerkennung beendet, und das Heizelement 28 wird abgeschaltet.

Die Steuereinheit ermittelt anhand der protokollierten Messwerte die Steigung der Temperatur während des Messintervalls und/oder den Temperaturunterschied zwischen zwei Messwerten des Messintervalls. Beispielsweise ermittelt sie den Unterschied zwischen der Temperatur T₀ zu Beginn des Messintervalls (Zeitpunkt t₁) und der Temperatur T₁ am Ende des Messintervalls M_{E} (Zeitpunkt t₂).

Die auf diese Weise ermittelte Temperaturdifferenz wird mit einem Schwellwert verglichen, der eine obere Grenze der Temperaturdifferenz, genauer gesagt eine obere Grenze der Temperaturzunahme bestimmt. Liegt die Temperaturdifferenz, wie im in Figur 2, Linie A gezeigten Fall darunter, so wird angenommen, dass der Kerntemperaturfühler 10 im Gargut 15 eingesteckt ist, da der Großteil der vom Heizelement 28 erzeugten Wärme in das Gargut abgeflossen ist und nicht zur Erwärmung der Messspitze 14 beigetragen hat.

Der Schwellwert kann ein vorbestimmter Schwellwert sein, der in der Steuereinheit hinterlegt ist. Der Schwellwert kann allerdings auch anhand der protokollierten Temperaturwerte der Referenztemperatursensoren 30, 32, 34, 36 an die derzeitigen Bedingungen angepasst werden. Hierdurch ist eine zuverlässigere Setzerkennung möglich.

Zur Erkennung, ob der Kerntemperaturfühler 10 eingesteckt wurde, kann entweder ein Vergleich der Steigung bzw. der Temperaturdifferenz mit einem Schwellwert für jeden Temperatursensor 20, 22, 24, 26 einzeln erfolgen, oder es wird der Mittelwert der Steigungen bzw. der Temperaturdifferenzen gebildet, der dann mit einem Schwellwert verglichen wird.

Im ersten Fall kann auch erkannt werden, wenn der Kerntemperaturfühler 10 nicht vollständig in das Gargut 15 eingesetzt wurde. Im Gegensatz dazu ist jedoch die letztere Vorgehensweise zuverlässiger und weniger fehleranfällig.

Im in Figur 2, Linie A gezeigten Fall erkennt also die Steuereinheit, dass der Kerntemperaturfühler 10 vollständig in einem Gargut 15 einsteckt ist, da der Temperaturunterschied den entsprechenden Schwellwert nicht überschritten hat.

Denkbar ist natürlich auch ein Vergleich von Steigungen des Temperaturverlaufes, wobei der Schwellwert in diesem Falle einer maximalen Steigung, d. h. einem maximalen Temperaturanstieg entspricht.

Nachdem erkannt wurde, dass der Kerntemperaturfühler 10 korrekt im Gargut 15 gesetzt ist, kann nun die Wärmeleitfähigkeit des Garguts 15 bestimmt werden. Hierzu werden in einem weiteren Messintervall Mw zur Messung der Wärmeleitfähigkeit abermals die von den Temperatursensoren 20, 22, 24, 26 gemessenen Temperaturen und die von den Referenztemperatursensoren 30, 32, 34, 36 gemessenen Temperaturen protokolliert. Das Messintervall M_{W} beginnt zum Zeitpunkt t₂, sodass das Heizelement 28 bereits vor dem Messintervall M_{W} eingeschaltet war und vor oder zum Beginn des Messintervalls M_{W} ausgeschaltet wurde.

Somit wird der Messspitze 14 keine Wärme mehr vom Heizelement 28 zugeführt, sodass die Messspitze 14 Wärme an das Gargut 15 abgibt, wodurch die von den Temperatursensoren 20, 22, 24, 26 gemessene Temperatur wieder abfällt.

Zum Zeitpunkt t₃ ist das Messintervall M_{W} zur Messung der Wärmeleitfähigkeit verstrichen und die Temperatur ist auf den Wert T₃ abgefallen.

Die Steuereinheit ermittelt nun wiederum die Steigung der Temperatur während des Messintervalls M_{W}, oder sie ermittelt den Temperaturunterschied zwischen zwei während des Intervalls aufgenommenen Temperaturwerten. Beispielsweise wird die Differenz aus dem Temperaturwert T₁ zum Zeitpunkt t₂ und dem Temperaturwert T₃ am Ende des Messintervalls M_{E} (Zeitpunkt t₃) ermittelt.

Anhand dieses Temperaturunterschiedes bestimmt die Steuereinheit, wie viel Wärme die Messspitze 14 während des Messintervalls M_{W} an das umliegende Medium, hier also das Gargut 15, abgegeben hat. Aus diesem Wert lässt sich dann die Wärmeleitfähigkeit des Gargutes 15 bestimmten.

Bei der Ermittlung der Wärmeleitfähigkeit können die Messwerte der Referenztemperatursensoren 30, 32, 34, 36 mit berücksichtigt werden, um die Temperatureinflüsse des sich abkühlenden Heizelementes 28 auf die Temperatursensoren 20, 22, 24, 26 bei der Berechnung zu berücksichtigen.

Die Messwerte der verschiedenen Temperatursensoren 20, 22, 24, 26 mitsamt den dazugehörigen Messwerten der Referenztemperatursensoren 30, 32, 34, 36 können dazu verwendet werden, einen Mittelwert zu bilden, um die Berechnung der Wärmeleitfähigkeit zu präzisieren. Entweder wird hierzu wird der Mittelwert aus den gemessenen Temperaturen berechnet, oder die Wärmeleitfähigkeit wird für jeden der Temperatursensoren 20, 22, 24, 26 einzeln bestimmt, und erst danach wird der Mittelwert der einzelnen Werte der Wärmeleitfähigkeit gebildet.

Denkbar ist jedoch auch, dass die Werte der Temperatursensoren 20, 22, 24, 26 und die daraus ermittelten einzelnen Werte der Wärmeleitfähigkeit dazu verwendet werden, um lokale Unterschiede in der Wärmeleitfähigkeit zu erkennen.

In einem weiteren Schritt kann die Steuereinheit mithilfe der bestimmten Wärmeleitfähigkeit weitere Eigenschaften des Gargutes 15 bestimmen, zum Beispiel den Wassergehalt des Gargutes 15.

Auch lokale Unterschiede der weiteren Eigenschaften, wie lokale Unterschiede im Wassergehalt, können ermittelt werden.

Im Falle, dass sich der Kerntemperaturfühler 10 nicht in einem Gargut 15 befindet (Figur 2, Linie B), steigt nach dem Einschalten des Heizelementes 28 zum Zeitpunkt t₁ die Temperatur an den Temperatursensoren 20, 22, 24, 26 rasch an, da die die Messspitze 14 umgebende Luft ein sehr guter thermischer Isolator ist. Somit fehlt die kühlende Wirkung des Gargutes 15, und die vom Heizelement 28 erzeugte Wärme führt vollständig zur Erhitzung der Messspitze 14.

Zum Zeitpunkt t₂ ist die Temperatur am betrachteten Temperatursensor stark gestiegen und liegt bei T₂. Die von der Steuereinheit ermittelte Temperaturdifferenz zwischen T₀ und T₂ überschreitet dabei deutlich den entsprechenden Schwellwert. Dementsprechend erkennt die Steuereinheit, dass der Kerntemperaturfühler 10 nicht korrekt in einem Gargut 15 gesteckt ist.

Daraufhin kann die Steuereinheit entsprechende Maßnahmen veranlassen, beispielsweise einen Warnton ausgeben lassen und/oder den Garvorgang abbrechen.

In diesem Falle wird außerdem nicht die Wärmeleitfähigkeit des den Kerntemperaturfühler 10 umgebenden Mediums bestimmt, sondern die Messung wird zum Zeitpunkt t₂, also am Ende des Messintervalls M_{E} zur Setzerkennung abgebrochen.

Das gezeigte Verfahren kann unabhängig davon durchgeführt werden, ob das Gargut 15 im Gargerät gegart wird. Das Garen des Gargutes 15 im Gargerät kann entweder durch eine hohe Temperatur der Atmosphäre im Gargerät oder durch Mikrowellenstrahlung erfolgen. Beide Methoden führen jedoch nur zu einer Aufwärmung der äußeren Schichten des Gargutes 15, die zudem relativ langsam verläuft.

Im Gegensatz dazu erfolgen die Messungen der Verfahren im Inneren des Gargutes 15 und sehr schnell, da instationäre Zustände gemessen werden. Deswegen sind die Messintervalle M_{W}, M_{E} kurz.

Die Einflüsse des Garvorgangs auf die Messwerte der Temperatursensoren 20, 22, 24, 26 erfolgt, wenn der Kerntemperaturfühler 10 in das Gargut 15 eingesetzt ist, erst nach dem Abschluss der beiden Messintervalle M_{E}, M_{W}. Der Einfluss des Garvorgangs auf die Temperatur ist in Figur 2 an der leicht ansteigenden Kurve zum rechten Ende des Graphen hin zu erkennen.

## Patentansprüche

1. Kerntemperaturfühler für ein Gargerät mit einer Messspitze (14), wenigstens einer Messstrecke (18), die an der Messspitze (14) angeordnet ist, und wenigstens einem Heizelement (28), das als Heizdraht ausgebildet ist und das sich in der Messspitze (14) entlang der Messstrecke (18) erstreckt, wobei die Messstrecke (18) mehrere Temperatursensoren (20, 22, 24, 26) aufweist, die zueinander beabstandet angeordnet sind, wobei das Heizelement (28) parallel zur Messstrecke (18) verläuft, **dadurch gekennzeichnet, dass** das Heizelement (28) wenigstens einen Referenztemperatursensor (30, 32, 34, 36) zur Messung der Temperatur des Heizelementes (28) aufweist, der neben einem der Temperatursensoren (20, 22, 24, 26) der Messstrecke (18) angeordnet ist, wobei der Abstand der Temperatursensoren (20, 22, 24, 26) voneinander in der Nähe der Spitze des Kerntemperaturfühlers kleiner ist als entfernt von der Spitze.

2. Kerntemperaturfühler nach Anspruch 1, **dadurch gekennzeichnet, dass** sich das Heizelement (28) zumindest entlang der gesamten Länge (L) der Messstrecke (18) erstreckt.

3. Kerntemperaturfühler nach einem der vorhergehenden Ansprüche, **dadurch gekennzeichnet, dass** das Heizelement (28) so viele Referenztemperatursensoren (30, 32, 34, 36) aufweist, wie Temperatursensoren (20, 22, 24, 26) an der Messstrecke vorgesehen sind.

4. Kerntemperaturfühler nach einem der vorhergehenden Ansprüche, **dadurch gekennzeichnet, dass** die Leistung des Heizelementes (28) kleiner als 20 W ist.

5. Verfahren zur Setzerkennung eines Kerntemperaturfühlers (10), der wenigstens einen Temperatursensor (20, 22, 24, 26) und ein Heizelement (28) umfasst, insbesondere gemäß einem der vorhergehenden Ansprüche, mit den folgenden Schritten:
a) Einschalten des Heizelementes (28),
b) Protokollieren der von dem wenigstens einen Temperatursensor (20, 22, 24, 26) gemessenen Temperatur für zumindest ein vorbestimmtes Messintervall (M_{E}, M_{W}),
c) Ermitteln der Steigung der Temperatur während des Messintervalls und/oder Ermitteln eines Temperaturunterschiedes zwischen zwei während des Messintervalls aufgenommenen Messwerten,
d) Vergleichen der Steigung und/oder des Temperaturunterschiedes mit einem entsprechenden Schwellwert, und
e) Erkennen, dass der Kerntemperaturfühler (10) in einem Gargut (15) gesetzt ist, wenn die Steigung und/oder der Temperaturunterschied den entsprechenden Schwellwert nicht überschritten hat.

6. Verfahren nach Anspruch 5, **dadurch gekennzeichnet, dass** das Heizelement (28) ausgeschaltet wird, sobald das Messintervall (M_{E}) verstrichen oder eine materialbedingte Maximaltemperatur erreicht ist.

7. Verfahren nach Anspruch 5 oder 6, **dadurch gekennzeichnet, dass** der Kerntemperaturfühler (10) mehrere Temperatursensoren (20, 22, 24, 26) aufweist, wobei die Messwerte jedes Temperatursensors (20, 22, 24, 26) einzeln mit einem Schwellwert verglichen werden und/oder ein Mittelwert aus den Messwerten mehrerer, insbesondere aller Temperatursensoren (20, 22, 24, 26) zum Vergleich mit einem Schwellwert gebildet wird.

8. Verfahren nach einem der Ansprüche 5 bis 7, **dadurch gekennzeichnet, dass** zur Bestimmung der Wärmeleitfähigkeit des Garguts (15) folgender Schritt durchgeführt wird:
a) Bestimmen der Wärmeleitfähigkeit des den Kerntemperaturfühler (10) umgebenden Mediums anhand der Steigung und/oder des Temperaturunterschiedes.

9. Verfahren nach Anspruch 8, **dadurch gekennzeichnet, dass** das Heizelement (28) vor oder während des Messintervalls (M_{W}) ausgeschaltet wird.

10. Verfahren nach Anspruch 8 oder 9, **dadurch gekennzeichnet, dass** der Kerntemperaturfühler (10) mehrere Temperatursensoren (20, 22, 24, 26) aufweist, wobei zur Bestimmung der Wärmeleitfähigkeit der Mittelwert der Messwerte der einzelnen Temperatursensoren (20, 22, 24, 26) und/oder der Mittelwert der Werte der für jeden Temperatursensor (20, 22, 24, 26) einzeln bestimmten Wärmeleitfähigkeit herangezogen wird.

11. Verfahren nach einem der Ansprüche 5 bis 10, **dadurch gekennzeichnet, dass** die Wärmeleistung des Heizelementes (28) derart gering gewählt ist, dass, wenn die Messspitze (14) des Kerntemperaturfühlers (10) in ein Gargut (15) eingesteckt ist, die vom Heizelement (28) erzeugte Wärme nahezu vollständig und unmittelbar vom Gargut (15) aufgenommen werden kann.

12. Verfahren nach einem der Ansprüche 5 bis 11, **dadurch gekennzeichnet, dass** mittels des Referenztemperatursensors (30, 32, 34, 36) eines Kerntemperaturfühlers (10) gemäß einem der Ansprüche 1 bis 5 auch die Temperatur am Heizelement (28) protokolliert und zur Bestimmung der Wärmeleitfähigkeit und/oder des Schwellwertes herangezogen wird.

13. Verfahren nach einem der Ansprüche 5 bis 12, **dadurch gekennzeichnet, dass** die Energie zum Heizelement kabellos übertragen wird.

## Claims

1. A core temperature sensor for a cooking appliance comprising a measuring tip (14), at least one measuring section (18) which is arranged on the measuring tip (14), and at least one heating element (28) which is in the form of a heating wire and extends in the measuring tip (14) along the measuring section (18), the measuring section (18) including a plurality of temperature sensors (20, 22, 24, 26) which are arranged spaced apart from each other, the heating element (28) extending parallel to the measuring section (18), **characterized in that** the heating element (28) includes at least one reference temperature sensor (30, 32, 34, 36) for measuring the temperature of the heating element (28), which is arranged next to one of the temperature sensors (20, 22, 24, 26) of the measuring section (18), the distance of the temperature sensors (20, 22, 24, 26) from each other being smaller near the tip of the core temperature sensor than remote from the tip.

2. The core temperature sensor according to claim 1, **characterized in that** the heating element (28) extends at least along the entire length (L) of the measuring section (18).

3. The core temperature sensor according to any of the preceding claims, **characterized in that** the heating element (28) includes as many reference temperature sensors (30, 32, 34, 36) as there are temperature sensors (20, 22, 24, 26) provided on the measuring section.

4. The core temperature sensor according to any of the preceding claims, **characterized in that** the power of the heating element (28) is less than 20 W.

5. A method of detecting the placement of a core temperature sensor (10) which comprises at least one temperature sensor (20, 22, 24, 26) and a heating element (28), in particular according to any of the preceding claims, comprising the following steps:
a) switching the heating element (28) on;
b) logging the temperature measured by the at least one temperature sensor (20, 22, 24, 26) for at least one predetermined measuring interval (M_{E}, M_{W});
c) determining the gradient of the temperature during the measuring interval and/or determining a temperature difference between two measured values picked up during the measuring interval;
d) comparing the gradient and/or the temperature difference with an appropriate threshold value; and
e) detecting that the core temperature sensor (10) has been placed in a food (15) to be cooked if the gradient and/or the temperature difference has not exceeded the appropriate threshold value.

6. The method according to claim 5, **characterized in that** the heating element (28) is switched off as soon as the measuring interval (M_{E}) has elapsed or a material-related maximum temperature has been reached.

7. The method according to claim 5 or 6, **characterized in that** the core temperature sensor (10) includes a plurality of temperature sensors (20, 22, 24, 26), the measured values of each temperature sensor (20, 22, 24, 26) being compared individually with a threshold value and/or a mean value being formed from the measured values of a plurality of, in particular all, the temperature sensors (20, 22, 24, 26) for a comparison with a threshold value.

8. The method according to any of claims 5 to 7, **characterized in that** the following step is carried out to determine the thermal conductivity of the food (15) to be cooked:
a) determining the thermal conductivity of the medium surrounding the core temperature sensor (10) based on the gradient and/or the temperature difference.

9. The method according to claim 8, **characterized in that** the heating element (28) is switched off before or during the measuring interval (M_{W}).

10. The method according to claim 8 or 9, **characterized in that** the core temperature sensor (10) includes a plurality of temperature sensors (20, 22, 24, 26), the mean value of the measured values of the individual temperature sensors (20, 22, 24, 26) and/or the mean value of the values of the thermal conductivity determined individually for each temperature sensor (20, 22, 24, 26) being used to determine the thermal conductivity.

11. The method according to any of claims 5 to 10, **characterized in that** the thermal output of the heating element (28) is selected to be so low that when the measuring tip (14) of the core temperature sensor (10) is inserted in a food (15) to be cooked, the heat generated by the heating element (28) can be absorbed almost completely and directly by the food (15) to be cooked.

12. The method according to any of claims 5 to 11, **characterized in that** by means of the reference temperature sensor (30, 32, 34, 36) of a core temperature sensor (10) according to any of claims 1 to 5, the temperature at the heating element (28) is also logged and used to determine the thermal conductivity and/or the threshold value.

13. The method according to any of claims 5 to 12, **characterized in that** the energy is transmitted to the heating element wirelessly.

## Revendications

1. Sonde de température à cœur pour appareil de cuisson, présentant une pointe de mesure (14), au moins un trajet de mesure (18) agencé au niveau de la pointe de mesure (14), et au moins un élément de chauffage (28) qui est réalisé sous forme de fil de chauffage et qui s'étend dans la pointe de mesure (14) le long du trajet de mesure (18), le trajet de mesure (18) présentant une pluralité de capteurs de température (20, 22, 24, 26) agencés à distance les uns des autres, l'élément de chauffage (28) s'étendant de manière parallèle au trajet de mesure (18), **caractérisée en ce que** l'élément de chauffage (28) présente au moins un capteur de température de référence (30, 32, 34, 36) pour la mesure de la température de l'élément de chauffage (28), qui est agencé à côté de l'un des capteurs de température (20, 22, 24, 26) du trajet de mesure (18), la distance des capteurs de température (20, 22, 24, 26) les uns des autres étant plus faible à proximité de la pointe de la sonde de température à cœur qu'à distance de la pointe.

2. Sonde de température à cœur selon la revendication 1, **caractérisée en ce que** l'élément de chauffage (28) s'étend au moins le long de toute la longueur (L) du trajet de mesure (18).

3. Sonde de température à cœur selon l'une des revendications précédentes, **caractérisée en ce que** l'élément de chauffage (28) présente autant de capteurs de température de référence (30, 32, 34, 36) que de capteurs de température (20, 22, 24, 26) prévus sur le trajet de mesure.

4. Sonde de température à cœur selon l'une des revendications précédentes, **caractérisée en ce que** la puissance de l'élément de chauffage (28) est inférieure à 20 W.

5. Procédé de détection de l'insertion d'une sonde de température à cœur (10) qui comprend au moins un capteur de température (20, 22, 24, 26) et un élément de chauffage (28), en particulier selon l'une des revendications précédentes, comprenant les étapes suivantes :
a) mise en marche de l'élément de chauffage (28),
b) enregistrement de la température mesurée par ledit au moins un capteur de température (20, 22, 24, 26) pour au moins un intervalle de mesure prédéterminé (M_{E}, M_{W}),
c) détermination de la pente de la température pendant l'intervalle de mesure et/ou détermination d'une différence de température entre deux valeurs mesurées saisies pendant l'intervalle de mesure,
d) comparaison de la pente et/ou de la différence de température avec une valeur seuil correspondante, et
e) détection que la sonde de température à cœur (10) est insérée dans un produit à cuire (15) lorsque la pente et/ou la différence de température n'a pas dépassé la valeur seuil correspondante.

6. Procédé selon la revendication 5, **caractérisé en ce que** l'élément de chauffage (28) est mis hors circuit dès que l'intervalle de mesure (M_{E}) s'est écoulé ou une température maximale due au matériau est atteinte.

7. Procédé selon la revendication 5 ou 6, **caractérisé en ce que** la sonde de température à cœur (10) présente une pluralité de capteurs de température (20, 22, 24, 26), les valeurs mesurées de chaque capteur de température (20, 22, 24, 26) étant individuellement comparées avec une valeur seuil, et/ou une valeur moyenne étant formée à partir des valeurs mesurées de plusieurs, en particulier de tous les capteurs de température (20, 22, 24, 26) pour une comparaison avec une valeur seuil.

8. Procédé selon l'une des revendications 5 à 7, **caractérisé en ce que** pour la détermination de la conductivité thermique du produit à cuire (15), l'étape suivante est réalisée :
a) détermination de la conductivité thermique du milieu entourant la sonde de température à cœur sur la base de la pente et/ou de la différence de température.

9. Procédé selon la revendication 8, **caractérisé en ce que** l'élément de chauffage (28) est mis hors circuit avant ou pendant l'intervalle de mesure (M_{W}).

10. Procédé selon la revendication 8 ou 9, **caractérisé en ce que** la sonde de température à cœur (10) présente une pluralité de capteurs de température (20, 22, 24, 26), la valeur moyenne des valeurs mesurées des capteurs de température individuels (20, 22, 24, 26) et/ou la valeur moyenne des valeurs de la conductivité thermique individuellement déterminée pour chaque capteur de température (20, 22, 24, 26) étant prise(s) en compte pour la détermination de la conductivité thermique.

11. Procédé selon l'une des revendications 5 à 10, **caractérisé en ce que** la puissance thermique de l'élément de chauffage (28) est choisie si faible que lorsque la pointe de mesure (14) de la sonde de température à cœur (10) est introduite dans un produit à cuire (15), la chaleur produite par l'élément de chauffage (28) peut être absorbée pratiquement entièrement et directement par le produit à cuire (15).

12. Procédé selon l'une des revendications 5 à 11, **caractérisé en ce qu'**au moyen du capteur de température de référence (30, 32, 34, 36) d'une sonde de température à cœur (10) selon l'une des revendications 1 à 5, la température au niveau de l'élément de chauffage (28) est également enregistrée et prise en compte pour la détermination de la conductivité thermique et/ou de la valeur seuil.

13. Procédé selon l'une des revendications 5 à 12, **caractérisé en ce que** l'énergie est transmise à l'élément de chauffage sans fil.
